# EUROPÄISCHE PATENTANMELDUNG

(11) **EP 2 332 774 A1**
(43) Veröffentlichungstag der Anmeldung: **15.06.2011**
(21) Anmeldenummer: 10192583.2
(22) Anmeldetag: 25.11.2010
(51) Int. Cl.: B60P 7/08

(54) **Vorrichtung zum Spannen einer Spannratsche von Zurrgurten**

(30) Priorität: 14.12.2009 DE 202009015724 U
(71) Anmelder: Kaiser, Karl, 94327 Bogen (DE)
(72) Erfinder: Cazzanelli, Astrid, 94350, Falkenfels (DE)
(74) Vertreter: Reichert, Sabine

(57) **Zusammenfassung**

Es ist eine Vorrichtung (1) zum Spannen einer Spannratsche (25) von Zurrgurten (23) offenbart, die ein Verlängerungselement (2) und ein Aufnahmeelement (3) umfasst, wobei das Aufnahmeelement (3) mit einem Spannhebel (24) einer Spannratsche (25) zusammenwirkt.

## Beschreibung

Die gegenwärtige Erfindung betrifft eine Vorrichtung zum Spannen einer Spannratsche von Zurrgurten. Im Besonderen umfasst die Vorrichtung ein Verlängerungselement und ein Aufnahmeelement zur Verbindung mit einem Spannhebel einer Spannratsche. Das Aufnahmeelement der Vorrichtung wirkt mit dem Spannhebel einer Spannratsche des Zurrgurts zusammen.

Das Prinzip von Werkzeugen, die zum Spannen von Zurrbändern oder Zurrgurten im Güterkraftverkehr Verwendung finden und auch als Verlängerungselemente für Spannratschen bekannt sind, sind im Stand der Technik hinreichend beschrieben.

So offenbart beispielsweise das Gebrauchsmuster DE 90 01 269 U1 Verlängerungselemente für Spannratschen, die eine leiterartige Verlängerung aufweisen und von außen an die Ratsche angesetzt werden. Mittels des verlängerten Hebels kann die Spannratsche mit weniger Kraftaufwand bewegt und das Zurrmittel gestrafft und/oder gespannt werden.

Weiter offenbart das Gebrauchsmuster DE 295 03 083 U1 ein Spanngerät zum Spannen eines Spannbandes, bei welchem eine zum Aufwickeln eines zu spannenden Bandendes mit einer antreibbaren Schlitzwelle ausgebildete Spannratsche und eine zum Gegenhalt am Band der Spannkraft entgegenwirkende selbsttätige Klemmeinrichtung vorgesehen sind. Als Betätigungsorgan dient ein Doppelfunktionshebel, der bei einer Schwenkung in Richtung der Schnalle mit Mitteln zum Antrieb der Schlitzwelle und bei Schwenkung in Gegenrichtung mit Mitteln zum Öffnen der Klemmeinrichtung und zum Abschneiden des aus der Schnalle austretenden Bandendes in Wirkverbindung steht, wobei der Hebel einen an der Schlitzwelle gelagerten, mit einem Drehgesperre zusammenwirkenden Grundkörper und ein mit einem Handgriff ausgebildetes Verlängerungsstück aufweist. Zwischen dem Grundkörper und dem Verlängerungsstück ist ein Gelenk angeordnet, das eine Überlastsicherung aufweist oder als solche ausgebildet ist.

Das Gebrauchsmuster DE 81 32 887 U1 beschreibt eine Spannvorrichtung mit Mitteln zur Spannkraftanzeige und/oder Spannkraftbegrenzung, zu denen eine Feder gehört, gegen deren Wirkung ein Anschlusselement hin und her bewegbar an einem Anschlussteil gelagert ist, um dem Benutzer der Spannvorrichtung die Spannkraft anzuzeigen und/oder eine Überlastung der Spannstränge automatisch zu verhindern.

Die deutsche Patentschrift DE 10 2005 054 016 B3 offenbart ein Verlängerungselement für Spannratschen mit einem Verlängerungskörper, an dessen einem Ende ein Aufnahmeelement zur Verbindung mit der Handhabe der Spannratsche und am gegenüberliegenden Ende ein Handgriff angeordnet sind, wobei der Handgriff und das Aufnahmeelement relativ zueinander mittels eines Widerstandselementes am Verlängerungskörper schwenkbar gelagert sind. In den Ausführungsformen ist das Widerstandselement im griffseitigen Endbereich des Verlängerungskörpers angeordnet. Ferner ist das Widerstandselement aus einem elastischen Material, wobei insbesondere die Verwendung mindestens einer Stahlfeder für das Widerstandselement vorgesehen ist.

Aufgabe der gegenwärtigen Erfindung ist es, eine Vorrichtung zum Spannen einer Spannratsche von Zurrgurten zu schaffen, mit der ein sicheres, kräftesparendes und genaues Anziehen über die Spannratsche möglich ist, wobei ein Überschreiten einer zulässigen Krafteinwirkung auf die Spannratsche von Zurrgurten verhindert ist.

Diese Aufgabe wird durch eine Vorrichtung zum Spannen einer Spannratsche von Zurrgurten gelöst, die die Merkmale im Patentanspruch 1 umfasst.

Eine Vorrichtung, wie es gemäß der Erfindung zum Spannen einer Spannratsche von Zurrgurten verwendet wird, verfügt über ein Verlängerungselement und ein Aufnahmeelement, wobei das Aufnahmeelement zur Verbindung mit einem Spannhebel einer Spannratsche vorgesehen ist.

Erfindungsgemäß wird vorgeschlagen, dass das Verlängerungselement derart drehmomentbegrenzend ausgestaltet ist, dass ein die Anziehkraft ausübender Hebel sich in axialer Richtung des Verlängerungselementes erstreckt und unmittelbar nach einem mit dem Aufnahmeelement verbundenen Verbindungselement einen Drehpunkt besitzt. Zum einen ergibt sich beim drehmomentgesteuerten Anzugsverfahren daraus, dass durch das Verlängerungselement eine große Kraftwirkung mit geringem Aufwand nach dem Hebelgesetz des mechanischen Kraftübertragungssystems ermöglicht wird. Zum anderen ergibt sich daraus, dass beim Anziehen des Zurrgurtes über die Spannratsche gemessene Drehmoment beim Erreichen eines vorgegebenen Sollwertes, wie hier die zulässige Krafteinwirkung auf die Spannratsche von Zurrgurten, ein Auslösesignal im Drehpunkt im Verlängerungselement erzeugt wird, so dass ein kräftesparendes und genaues Anziehen über die Spannratsche möglich ist.

Für einen Fachmann ist es offensichtlich, dass sich die drehmomentbegrenzende Ausgestaltung im Verlängerungselement aus den Anforderungen von Ladungssicherungseinrichtungen auf Straßenfahrzeugen nach der DIN EN 12195-2 ergibt. Die Spannratsche von Zurrgurten darf vorschriftsgemäß nur mit der zulässigen Handkraft gespannt werden. So ist die zulässige Handkraft, wie beispielsweise bei Standardspannratschen, auf 50 Dekanewton begrenzt.

Gemäß einer ersten Ausführungsform der Erfindung weist das Verlängerungselement beim Erreichen der Drehmomentbegrenzung im Drehpunkt ein spürbares Auslösesignal auf. Vorzugsweise ist das spürbare Auslösesignal ausrastend oder abknickend ausgebildet, so dass ein ungewolltes Überziehen der Spannratsche sowie ein Überspannen des Zurrgurtes ausgeschlossen sind.

In einer Weiterführung der oben beschriebenen Ausführungsform weist das im Drehpunkt spürbare Auslösesignal ein im Verlängerungselement zusätzliches akustisches und/oder visuelles Auslösesignal auf. Ist das zusätzliche Auslösesignal akustisch, so kann beispielsweise ein Piezosummer als akustischer Signalgeber eingesetzt werden. Wenn das Auslösesignal optisch erfolgt, ist beispielsweise eine digitale Anzeige am Verlängerungselement vorgesehen.

Wie bereits oben beschrieben, kann durch das Verlängerungselement, das aus unbehandelten, legierten oder lackierten Metall oder Stahl besteht, eine große Kraftwirkung mit geringem Aufwand erzielt werden. Das heißt, je größer dieser Abstand, desto größer die Drehwirkung der angreifenden Kraft. Daher kann das Verlängerungselement auch unterschiedliche Größen von bis zu 550 mm mit oder ohne einen Handgriff aufweisen. Der Handgriff kann dabei aus unterschiedlichsten Materialien bestehen, wie beispielsweise aus Gummi oder Kunststoff. Ferner kann das Verlängerungselement selbst auch unterschiedliche Formen aufweisen. Eine Form kann oval sein, andere Ausgestaltungen des Verlängerungselementes können aber auch rund, rechteckig oder quadratisch sein.

Die Vorteile der Erfindung treten besonders stark hervor, wenn das Verlängerungselement ein Drehmomentschlüssel ist. Drehmomentschlüssel sind aus dem Stand der Technik bekannt und zeichnen sich durch ihre Ausübung mit einem definierten Anzugsmoment auf ein Verbindungselement aus.

Zielanwendung der erfindungsgemäßen Vorrichtung zum Spannen einer Spannratsche von Zurrgurten ist, dass der Drehmomentschlüssel einen in Abhängigkeit von der zulässigen Krafteinwirkung auf die Spannratsche festeingestellten Drehmomentwert aufweist. Vorzugsweise weist der im Drehmomentschlüssel festeingestellte Drehmomentwert eine praktikable Größenanordnung auf, der die wie bereits oben beschriebene vorgesehene zulässige Handkraft des Zurrgutes von 50 Dekanewton bei Standardspannratschen erreicht. Es ist für den Fachmann selbstverständlich, dass auch andere im Drehmomentschlüssel festeingestellte Drehmomentwerte mit anderen Größenanordnungen denkbar sind, da verschiedene Zurrgurtsysteme mit unterschiedlichen Zurrkräften im Stand der Technik offenbart sind.

Es sei an dieser Stelle erwähnt, dass am Drehmomentschlüssel mindestens eine Skala, Feinskala und/oder Doppelskala, vorgesehen sein kann, die für variabel einzustellende Drehmomente Anwendung findet.

Eine vorteilhafte Bauform der erfindungsgemäßen Vorrichtung kann vorsehen, dass das Aufnahmeelement mit dem Verbindungselement starr verbunden ist, wie beispielsweise durch eine stoffschlüssige Verbindung. Das heißt das Aufnahmeelement ist vom Verbindungselement sowie das Verbindungselement vom Aufnahmeelement nicht lösbar, wie vorzugsweise durch ein unlösbares Verbinden von Aufnahmeelement und Verbindungselement unter Anwendung von Wärme oder Druck, mit oder ohne Schweißzusatzwerkstoffen.

Das Verbindungselement kann bei einer starren Verbindung als ein Einsteck-Anschweißstück ausgebildet sein. Derartige Einsteck-Anschweißstücke sind in vielfältiger Form und Ausführung auf dem Markt bekannt und gebräuchlich. Sie dienen insbesondere zur Lösung schwieriger Montageprobleme bei einer Verschweißung individuellster Werkzeuge.

In einer anderen Ausführungsform ist das Aufnahmeelement lösbar mit dem Verbindungselement verbunden, wie beispielsweise durch eine formschlüssige Verbindung mittels einer Passfeder.

Es ist für den Fachmann selbstverständlich, dass bei der Erfindung auch jedes andere Verbindungsverfahren sowie jedes andere Verbindungselement zwischen dem Aufnahmeelement und Verbindungselement angewandt werden kann.

In einer ersten Ausführungsform der Erfindung ist das Aufnahmeelement aus einem U-förmigen Querschnitt und aus zwei Schenkeln gebildet. Jeder Schenkel ist aus einem L-förmigen Querschnitt geformt. In einer Ausführungsform sind die freien Enden der Schenkel aufeinander zu geneigt bzw. laufen aufeinander zu. Ferner sind die beiden nach innen verlaufenden L-förmigen Schenkel mittels einer Querverstrebung verbunden. Diese Bauform bildet eine Auflagefläche mit der Angriffsfläche des Spannhebels der Spannratsche und trägt mittels der Querverstrebung zugleich zur Stabilisierung bei, um ein unbeabsichtigtes Lösen der Vorrichtung von der Spannratsche beim Spannen des Zurrgurtes zu verhindern.

In einer weiteren Ausführungsform ist das Aufnahmeelement erneut aus einem U-förmigen Querschnitt und aus zwei Schenkeln gebildet: Jeder Schenkel besitzt einem L-förmigen Querschnitt, wobei die Schenkel über ihre gesamte Länge parallel sind. Ein querverlaufender Flachwerkstoff verbindet die Schenkel und bildet eine stabilisierende Wirkung zum sicheren Anziehen eines Spannhebels einer Spannratsche. Ferner kann das Aufnahmeelement bei anderen Ausführungsformen auch eine geschlossene Bauweise, eine gerade Bauweise mittels Längsstreben oder andere dem Spannhebel einer Spannratsche angepasste Bauweisen aufweisen.

Es sei an dieser Stelle erwähnt, dass das Aufnahmeelement wie das oben beschriebene Verlängerungselement aus unbehandelten, legierten oder lackierten Metall oder Stahl besteht. Es kann aber auch jeder andere denkbare Werkstoff zur Ausgestaltung des Aufnahmeelementes verwendet werden.

Im Wesentlichen gibt es zwei unterschiedliche Typen von Spannratschen bei Zurrgurten, die sich hinsichtlich der zulässigen Handkraft auf die Spannratsche unterscheiden. Um ein Überschreiten der Kraftangaben gemäß den Zurrgurt-Etiketten auszuschließen, sind zwei unterschiedliche Vorrichtungen zum Spannen einer Spannratsche vorgesehen. Die Vorrichtungen unterscheiden sich im Wesentlichen in Bezug auf das Aufnahmeelement und das zugehörige Verlängerungselement. Eine Spannratsche kann folglich nur mit der zugehörigen Vorrichtung gespannt werden. Die Verwendung der Vorrichtung zum Spannen mit einem nicht zugeordneten Typ einer Spannratsche ist somit ausgeschlossen.

Im Folgenden sollen die Erfindung und ihre Vorteile anhand der beigefügten Figuren erläutert werden. Dabei zeigen:
- Figur 1: einen schematischen Aufbau eines Straßenfahrzeuges, mit dem eine Ladung gemäß dem Stand der Technik gesichert werden kann;
- Figur 2: eine erste schematische Ansicht der erfindungsgemäßen Vorrichtung zum Spannen einer Spannratsche von Zurrgurten;
- Figur 3: eine Perspektivansicht der Vorrichtung nach Figur 2; und
- Figur 4: eine zweite schematische Ansicht der erfindungsgemäßen Vorrichtung zum Spannen einer Spannratsche von Zurrgurten.

Für gleiche oder gleich wirkende Elemente der Erfindung werden identische Bezugszeichen verwendet. Ferner werden der Übersicht halber nur Bezugszeichen in den einzelnen Figuren dargestellt, die für die Beschreibung der jeweiligen Figur erforderlich sind. Die dargestellten Ausführungsformen stellen lediglich Beispiele dar, wie die Vorrichtung zum Spannen einer Spannratsche von Zurrgurten ausgestaltet sein kann und stellen keine abschließende Begrenzung der Erfindung dar.

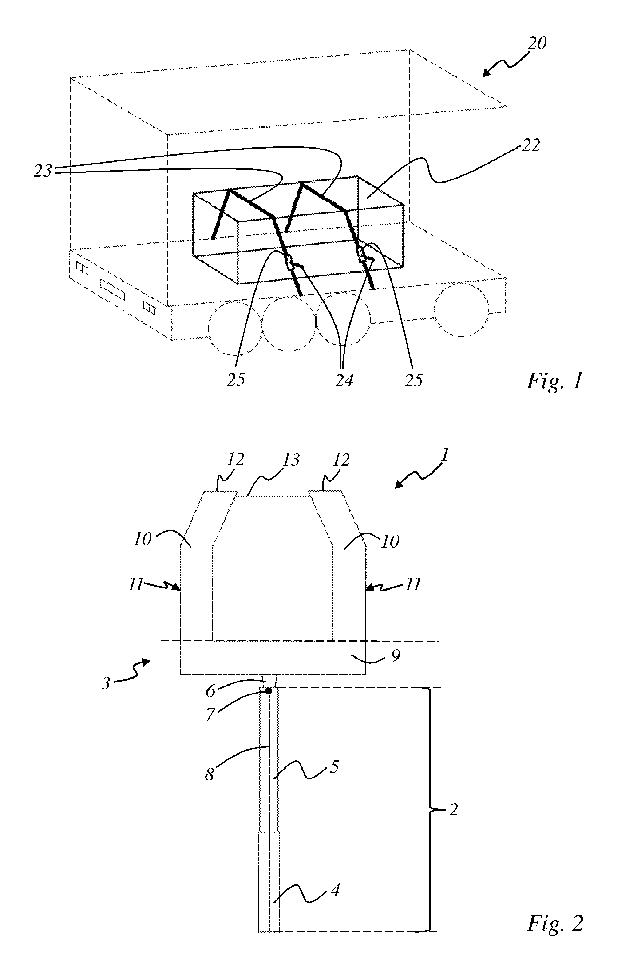

**Figur 1** zeigt einen schematischen Aufbau eines Straßenfahrzeuges 20, mit dem eine Ladung 22 gemäß dem Stand der Technik gesichert ist. In der gezeigten Ausprägung umfasst das Straßenfahrzeug 20 zur Sicherung der Ladung 22 zwei Zurrgurte 23, wobei den zwei Zurrgurten 23 jeweils eine Spannratsche 25 zugeordnet ist. Ferner weisen beide Spannratschen 25 jeweils einen Spannhebel 24 auf. Jeder Spannhebel 24 wird mit der Handkraft eines Anwenders betätigt, um die Zurrgurte 23 zu spannen und die Ladung 22 im Straßenfahrzeug 20 für den Transport zu sichern.

Die vom Anwender angewandte Handkraft kann weder eingeschätzt noch geprüft werden, was zu einer Über- oder Unterspannung der Spannratsche 25 sowie deren Zurrgurte 23 führt. Eine Beschädigung oder ein Versagen der Spannratsche 23 kann nicht ausgeschlossen werden, wobei beschädigte Zurrgurtsysteme nach der Rechtsprechung nicht mehr zur Ladungssicherung im Güterkraftverkehr verwendet werden dürfen.

**Figur 2** zeigt eine erste schematische Ansicht der erfindungsgemäßen Vorrichtung 1 zum Spannen einer Spannratsche 25 von Zurrgurten 23 (nicht dargestellt). In der gezeigten Ausprägung umfasst die Vorrichtung 1 ein Verlängerungselement 2 und ein Aufnahmeelement 3, wobei das Aufnahmeelement 3 zur Verbindung mit einem Spannhebel 24 (nicht dargestellt) einer Spannratsche 25 (ebenfalls nicht dargestellt) vorgesehen ist. Das Verlängerungselement 2 ist derart ausgestaltet, dass ein die Anziehkraft ausübender Hebel 8 sich in axialer Richtung des Verlängerungselementes 2 erstreckt und unmittelbar nach einem mit dem Aufnahmeelement 3 verbundenen Verbindungselement 6 einen Drehpunkt 7 besitzt. Das Aufnahmeelement 3 ist mit dem Verbindungselement 6 über ein Einsteck-Anschweißstück starr verbunden. Ferner ist das Verbindungselement 6 als ein Drehmomentschlüssel mit einem in Abhängigkeit von der zulässigen Krafteinwirkung auf die Spannratsche 25 festeingestellten Drehmoment ausgebildet. Durch die hier beschriebene Anordnung des Verlängerungselementes 2 kann das beim Anziehen gemessene Drehmoment beim Erreichen einer Drehmomentbegrenzung durch ein spürbares Auslösesignal im Drehpunkt 7 ausrasten oder abknicken, so dass ein weiteres Spannen des Zurrgurtes 23 verhindert wird. Ferner weist das Verlängerungselement 2 einen Handgriff 4 auf, um ein anwenderorientiertes Spannen zu ermöglichen.

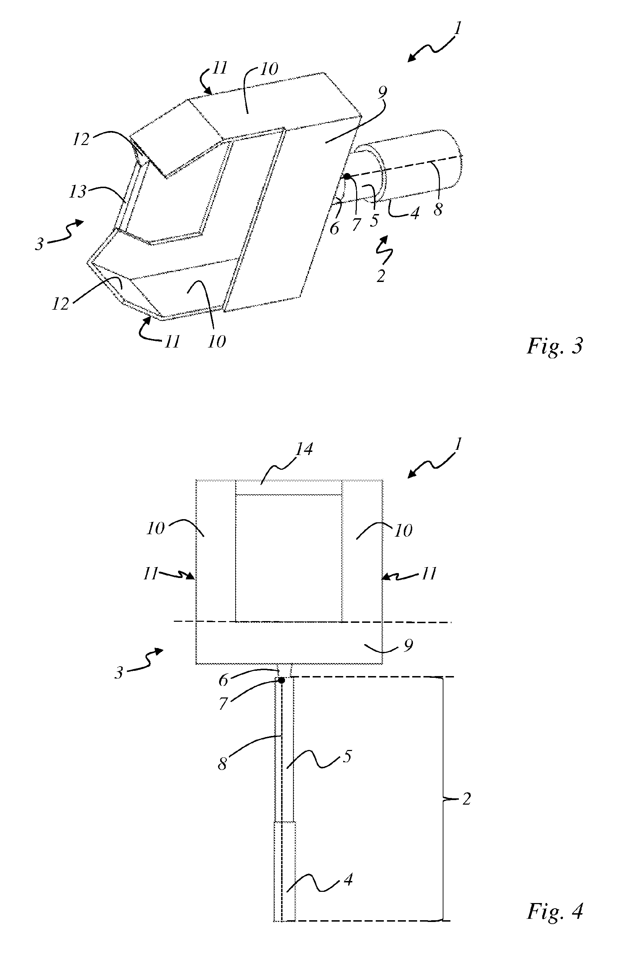

Wie bereits erwähnt, verfügt die Vorrichtung 1 über ein Aufnahmeelement 3. Das Aufnahmeelement 3 ist im Wesentlichen aus einem U-förmigen Querschnitt 9 und zwei Schenkeln 11 gebildet. Jeder Schenkel 11 ist aus einem L-förmigen Querschnitt 10 hergestellt. Bei der in den Figuren 2 und 3 gezeigten Ausführungsformen verlaufen die freien Enden 12 der L-förmigen Schenkel 11 nach innen bzw. aufeinander zu. Beide nach innen verlaufenden freien Enden 12 sind mittels einer Querverstrebung 13 verbunden, so dass eine Auflagefläche mit der Angriffsfläche des Spannhebels 24 der Spannratsche 25 geschaffen ist. Ebenso ist durch die Querverstrebung 13 ein falsches Ansetzen der Vorrichtung 1 an den Spannhebel 24 der Spannratsche 25 verhindert.

**Figur 3** zeigt eine Perspektivansicht der Vorrichtung 1 nach Figur 2. Alle Elemente sind bereits in Figur 2 beschrieben.

**Figur 4** zeigt eine zweite schematische Ansicht der erfindungsgemäßen Vorrichtung 1 zum Spannen einer Spannratsche von Zurrgurten 23 (nicht dargestellt), wobei die Vorrichtung 1, wie bereits in Figur 2 beschrieben, ein Verlängerungselement 2, ein Verbindungselement 6 und ein Aufnahmeelement 3 umfasst. Die Ausgestaltungen des Verlängerungselementes 2 und des Verbindungselementes 6 sind analog zu Figur 2, jedoch weist das Aufnahmeelement 3 zur Verbindung mit einem Spannhebel 24 (nicht dargestellt) einer Spannratsche 25 (nicht dargestellt) eine weitere Ausbildungsmöglichkeit auf. Das Aufnahmeelement 3 ist hier aus einem U-förmigen Querschnitt 9 und zwei Schenkeln 11 gebildet, wobei jeder Schenkel 11 einen L-förmigen Querschnitt 10 bildet. Beide Schenkel 11 sind durch einen querverlaufenden Flachwerkstoff 14 verbunden, der ein falsches Ansetzen der Vorrichtung 1 an den Spannhebel 24 der Spannratsche 25 auch hier verhindert.

Die gegenwärtige Erfindung ist in Bezug auf bevorzugte Ausführungsformen beschrieben worden. Dennoch können Änderungen und Abwandlungen der hier vorgeschlagenen Gestaltungen der Vorrichtung zum Spannen einer Spannratsche von Zurrgurten durchgeführt werden, ohne dabei den Schutzbereich der nachstehenden Ansprüche zu verlassen.

### Bezugszeichenliste

- 1: Vorrichtung
- 2: Verlängerungselement
- 3: Aufnahmeelement
- 4: Handgriff
- 5: Drehmomentschlüssel
- 6: Verbindungselement
- 7: Drehpunkt
- 8: Hebel
- 9: U-förmiger Querschnitt
- 10: L-förmiger Querschnitt
- 11: Schenkel
- 12: freies Ende
- 13: Querverstrebung
- 14: Flachwerkstoff
- 20: Straßenfahrzeug
- 22: Ladung
- 23: Zurrgurt
- 24: Spannhebel
- 25: Spannratsche

## Patentansprüche

1. Vorrichtung (1) zum Spannen einer Spannratsche (25) von Zurrgurten (23), wobei die Vorrichtung (1) ein Verlängerungselement (2) und ein Aufnahmeelement (3) umfasst, und das Aufnahmeelement (3) mit einem Spannhebel (24) einer Spannratsche (25) des Zurrgurts (23) zusammenwirkt,
**dadurch gekennzeichnet, dass**
das Verlängerungselement (2) derart drehmomentbegrenzend ausgestaltet ist, dass ein die Anziehkraft ausübender Hebel (8) sich in axialer Richtung des Verlängerungselementes (2) erstreckt und unmittelbar nach einem mit dem Aufnahmeelement (3) verbundenen Verbindungselement (6) einen Drehpunkt (7) besitzt.

2. Vorrichtung (1) nach Anspruch 1, wobei das Verlängerungselement (2) beim Erreichen der Drehmomentbegrenzung im Drehpunkt (7) ein spürbares Auslösesignal aufweist, derart dass, das spürbare Auslösesignal ausrastend oder abknickend ist.

3. Vorrichtung (1) nach Anspruch 2, wobei das im Drehpunkt (7) spürbare Auslösesignal ein im Verlängerungselement (2) zusätzliches akustisches und/oder visuelles Auslösesignal aufweist.

4. Vorrichtung (1) nach den Ansprüchen 1 bis 3, wobei das Verlängerungselement (2) ein Drehmomentschlüssel (5) ist.

5. Vorrichtung (1) nach den Ansprüchen 3 und 4, wobei der Drehmomentschlüssel (5) einen in Abhängigkeit von der zulässigen Krafteinwirkung auf die Spannratsche (25) festeingestellten Drehmomentwert aufweist.

6. Vorrichtung (1) nach Anspruch 1, wobei das Aufnahmeelement (3) mit dem Verbindungselement (6) starr verbunden ist.

7. Vorrichtung (1) nach Anspruch 6, wobei das Verbindungselement (6) ein Einsteck-Anschweißstück ist.

8. Vorrichtung (1) nach Anspruch 1, wobei das Aufnahmeelement (3) lösbar mit dem Verbindungselement (6) verbunden.
